# EUROPEAN PATENT APPLICATION

(11) **EP 2 698 696 A1**
(43) Date of publication of application: **19.02.2014**
(21) Application number: 12180897.6
(22) Date of filing: 17.08.2012
(51) Int. Cl.: G06F 3/0484, G06F 3/0488, G06K 9/20, G06T 11/20

(54) **Smudge effect for electronic drawing application**

(71) Applicant: BlackBerry Limited, Waterloo, ON N2K 0A7 (CA)
(72) Inventor: Robinson, James Alexander, Waterloo, Ontario N2L 3W8 (CA); Singh, Amit Pal, Waterloo, Ontario N2L 3W8 (CA); Parekh, Premal, Waterloo, Ontario N2L 3W8 (CA)
(74) Representative: Noble, Nicholas

(57) **Abstract**

An electronic device (110) and method provide for line smudging in electronic drawing. The electronic device (110) has a touch sensitive display screen (108) that is responsive to user touch (102) and input from a stylus (102). A graphics module (306) is operable to render a line (116) on the touch sensitive display screen (108) in response to motion of the stylus (102). If a trajectory (202) of the touch input intersects with the line (116) within a set time period after the line is rendered, the line is replaced by a representation (118) of a smudged line. The electronic device may be controllable by instructions stored on a computer-readable medium.

## Description

### BACKGROUND

When drawing or writing on a paper using a medium such as ink, paint, charcoal or chalk, a line can be "smudged" if a finger or palm of a person is dragged across it. This may be done intentionally, such as by an artist desiring to produce special drawing effects, or un-intentionally.

Electronic drawing applications have attempted to replicate this effect by providing a 'smudge tool'. A smudge tool causes the appearance of a smudge to be rendered that follows the motion of an input device, such as an active stylus. Thus a smudge tool may replicate a person moving an ink-covered finger over a sheet of paper, but not replicate smudging a line previously drawn on the paper. A smudge tool may additionally be used with images, such as photographs. While similar to the first approach, the color of the rendered smudge is determined by the color of the image where the stylus first contacts the image. Neither of these approaches satisfactorily simulates the smudging of a line since both require a 'smudge tool' to be selected and neither allows smudging when a line drawing tool is selected.

It would be useful to provide a way to simulate line smudging in an electronic drawing application that does not require the use of a special smudge tool.

### BRIEF DESCRIPTION OF THE DRAWINGS

Exemplary embodiments of the disclosure will be described below with reference to the included drawings such that like reference numerals refer to like elements and in which:

**FIG. 1** is a diagram of a computer drawing system, in accordance with exemplary embodiments of the disclosure;

**FIG. 2** is a diagram depicting smudging of a line rendered on a display screen of an electronic device, in accordance with exemplary embodiments of the disclosure;

**FIG. 3** is a block diagram of an electronic device, in accordance with exemplary embodiments of the disclosure; and

**FIG. 4** is a flow chart of a method for rendering an image on a display screen of an electronic device, in accordance with exemplary embodiments of the disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

When drawing or writing on a paper using a medium such as ink, paint, charcoal or chalk, a line can be "smudged" if a finger or palm of a person is dragged across it. This may be done intentionally, such as by an artist desiring to produce special affect in their drawing, or un-intentionally. For ink and paint, a line is capable of being smudged for only a few seconds or minutes after it is drawn, while the ink or paint is still wet. However, the line cannot be smudged once the medium has dried.

In accordance with certain aspects of the disclosure, a 'smudge' feature is provided in an electronic drawing application. The smudge features enables lines, rendered on a display screen of an electronic device in response to motion of an active stylus, to appear to be smudged by a finger or palm of a user. In one embodiment, for a period of time after line is rendered on the screen by the active stylus, a finger or palm movement on any portion of the line will result in the rendered line being replaced by a rendering of a smudged line. Once a set period time has elapsed since the original line was rendered, running a finger or palm over the line will have no effect. In this way, the effect of ink or paint drying may be replicated in the drawing application.

This feature enables artists to create special effects using smudging as they would on normal paper or canvas and also give users a feeling of writing on "real paper".

In certain exemplary embodiments, the drying time, after which a rendered line cannot be smudged, may be varied providing a meaningful way of dealing with different media that have different drying times. Thus, ink may be simulated to dry faster than paint. Chalk and charcoal may be capable of being smudged indefinitely.

In other exemplary embodiments, the smudging feature may be turned on or off by the user.

In still other exemplary embodiments, the smudging effect may be reversible by the user.

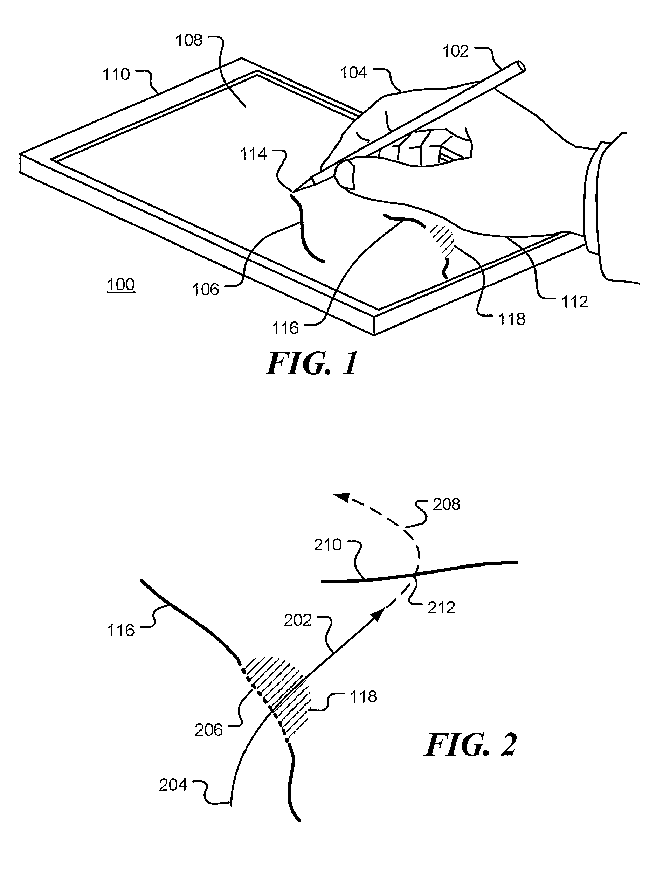

**FIG. 1** is a diagram of an illustrative computer drawing system 100, in accordance with some embodiments. In **FIG. 1**, a stylus 102 or other pointing device is manipulated by a user 104 to draw a line or other image 106 on a touch screen 108 of an electronic device 110. The touch screen 108 may be a capacitive or resistive touch screen, for example. The electronic device 110 may be a laptop computer, tablet computer (tablet), mobile phone, smart-phone, personal digital assistant (PDA), or other portable or non-portable electronic device.

In operation, the touch screen 108 of the electronic device 110 senses one or more touch positions at which a pointing device, such as a stylus 102 or a finger of a user 104, touches, or almost touches, the touch screen 108. When used for drawing or writing, the palm 112 of the user may touch the touch screen 108. The touch of the palm 112 may not be intended as input to the electronic device. When the stylus 102 is an active stylus, the touch position 114 of the stylus may be differentiated from the touch position of the palm 112 of the user.

In accordance with a first aspect of the disclosure, if a trajectory of a touch position other than the stylus position (such as the touch position of palm 112) intersects with a recently drawn line (such as line 116), the rendering of the line is replaced by an image 118 resembling a smudged line. This is illustrated in more detail in **FIG. 2**.

**FIG. 2** is a diagram showing a line 116 rendered on a display screen of an electronic device in response to stylus input. Line 202 denotes the trajectory of a user touch position (produced by a palm touch or a finger touch, for example). Position 204 denotes the initial touch position. In contrast with prior smudge tools, no image is rendered or changed in the region of the original touch position 204 if the region of touch does not intersect with a line. The touch trajectory 202 intersects with line 116 in an intersection region denoted by the broken line 206. If the intersection occurs within a set period of time after the line 116 was drawn, an image 118 of a smudged line is produced contiguous with the intersection region, dependent upon the trajectory 202 and contiguous with the region of intersection 206.

In the example shown in FIG. 2, the touch trajectory 208 intersects with line 210 at intersection region 212. However, the line 210 was drawn at a time before the set period, so the line is not redrawn as a smudged line. Thus, in this embodiment, the smudged line is only rendered if the touch point trajectory 202 intersects with a previously drawn line within a set period of time after the line was drawn.

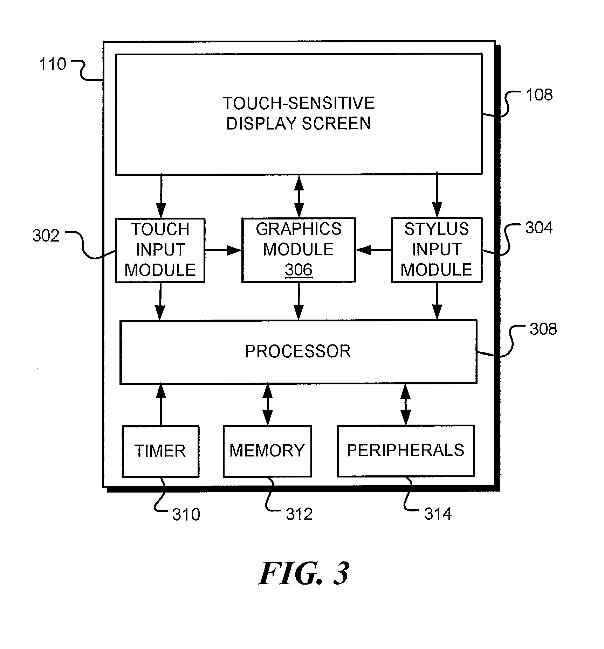

**FIG. 3** is a block diagram of an electronic device in accordance with the disclosure. The electronic device 110 includes a touch sensitive display screen 108 that is responsive to user touch via touch input module 302 and to an active stylus input via stylus input 304. Graphics module 306 is operable to render images on the touch sensitive display screen 108.

In operation, the graphics module 306, under control of a drawing application executed on processor 308, responds to motion of the stylus in a first region (sensed by stylus input module 304) and renders an image of a line on the display screen 108 in the first region of the display screen. At the same time, touch input (sensed by touch input module 302) is monitored. If touch input is detected in the first region, the image of the line is replaced with an image of a smudged line. The smudged line image is dependent upon the path of the user touch.

The electronic device 110 also includes a timing module 310 that is used to determine the time at which a stylus position is detected. The time and corresponding line parameters are stored in a database in memory 312. The line parameters may be stylus position coordinates, position identifier, line attributes (width, color, etc) and/or an identifier of an adjacent position. In one illustrative embodiment, when a touch input is detected in a region, the database in memory 312 is searched to find line segments that (i) where drawn within a specified time period of the detected touch input and (ii) intersect with the region of the touch. If the elapsed time between when a line was drawn when a touch input is detected in the same region is less than a set time, the line segment is replaced with a smudged line segment. The set time may mimic the drying time of ink or paint, for example. The image of the line is only replaced with the image of the smudged line if the user touch is detected in the first region while the elapsed time is less than a set time.

The properties of smudged line (such as the color) are selected dependent upon the properties of the intersected line. The position and extent of the smudge may be determined from the trajectory or path of the touch input.

Electronic device 110 may also include one or more peripheral devices 314, such as user inputs (mouse, keyboard, microphone, camera, switches, etc.), transceivers for wireless communication with a network or other electronic devices, ports for wired communication with a network or other electronic devices.

The processor 308 and/or graphics module 306 may be controlled by software instructions stored on a computer readable medium, such as memory 312. The drawing application may be executed on the processor 308, or on a remote processor in communication with the electronic device 110 via a network.

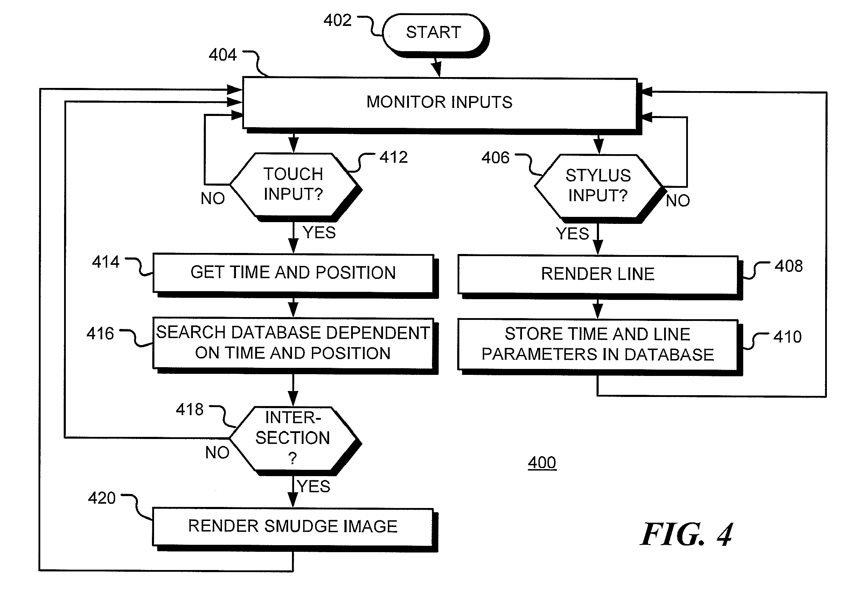

**FIG. 4** is a flow chart 400 of a method for rendering an image on a display screen of an electronic device, in accordance with exemplary embodiments. Following start block 402, stylus and touch inputs to the electronic device are monitored at block 404. If a stylus input is detected in a first region of the display at a first time, as depicted by the positive branch from decision block 406, an image of a line (corresponding to consecutive stylus positions) is rendered in the first region at block 408. The first time and corresponding parameters of the line (such as the stylus position coordinates, and line properties such as color, width, etc.) are stored in a database at block 410. Flow then returns to block 404. If a touch input is detected, as depicted by the positive branch from decision block 412, the time and position (or region) of the touch are determined at block 414. Consecutive touch positions define a user touch trajectory. At block 416, the database of stylus positions is searched dependent upon the touch trajectory and the time of the touch to discover any regions of intersection of the user touch trajectory and lines rendered on the screen. Flow follows the positive branch from decision block 418 if a new region of intersection is detected or if the current touch trajectory has already intersected a recent line. Otherwise flow returns to block 404 via the negative branch from decision block 418. At block 420, an image of a smudged line is rendered in a second region of the display. The second region is dependent upon the user touch trajectory and is contiguous to the region of intersection. The properties of the rendered smudged line, such as the color, are selected dependent upon the properties of the intersected line in the region of intersection. An intersection of the touch input trajectory with a line may be neglected if the line was not are drawn within a set time of the touch input. This feature enables the drying of ink or paint to be simulated. The 'drying time' may be selected by a user or may be selected automatically dependent upon the medium selected for line drawing.

For the embodiment shown in **FIG. 4** it can be seen that the stylus input and the user touch input are both monitored together, and that the smudge feature and the line drawing feature are active at the same time. This is in contrast to prior smudging techniques, which require the selection of a smudge tool and do not interact with lines drawn in the same time period by a line drawing tool.

The implementations of the disclosure described above are intended to be merely exemplary. It will be appreciated by those of skill in the art that alterations, modifications and variations to the illustrative embodiments disclosed herein may be made without departing from the scope of the disclosure. Moreover, selected features from one or more of the above-described embodiments may be combined to create alternative embodiments not explicitly shown and described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the disclosure described above are intended to be merely exemplary. It will be appreciated by those of skill in the art that alterations, modifications and variations to the illustrative embodiments disclosed herein may be made without departing from the scope of the disclosure. Moreover, selected features from one or more of the above-described embodiments may be combined to create alternative embodiments not explicitly shown and described herein.

The disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device (110) comprising:
a touch sensitive display screen (108) responsive to user touch and a stylus (102); and
a graphics module (306) operable to render an image (116) of a line in a first region of the touch sensitive display screen (108) in response to motion of the stylus (102) at a first time in the first region and further operable to replace the image of the line with an image (118) of a smudged line in the first region in response to detection of a user touch (112) in the first region at a second time subsequent the first time, the image (118) of the smudged line having a smudged characteristic.

2. The electronic device (110) of claim 1, where the image (118) of the smudged line is dependent upon a path (202) of the user touch (112).

3. The electronic device (110) of claim 1, where the image (118) of the smudged line is dependent upon one or more properties of the image (116) of the line in the first region.

4. The electronic device of claim 1, further comprising:
a timing module (310), operable to determine an elapsed time since the first time,
where the image (118) of the smudged line is dependent upon the elapsed time since the first time.

5. The electronic device (110) of claim 1, further comprising:
a timing module (310), operable to determine an elapsed time since the first time,
where the image (116) of the line is only replaced with the image (118) of the smudged line if the user touch (112) is detected in the first region while the elapsed time is less than a set time.

6. The electronic device (110) of claim 1, further comprising:
a timing module (310), operable to determine the first time and the second time;
a memory operable (312) to store a database of rendered lines; and
a processor (308) operable to store the first time and one or more parameters related to the rendered lines in a database of rendered lines and further operable to search the database of rendered lines dependent upon the second time a region of user touch (112) at the second time.

7. The electronic device (110) of claim 6, where the processor (308) is further operable to store one or more properties of the image (116) of the line rendered in the first region in the database of rendered lines.

8. The electronic device (110) of claim 6, where the one or more properties of the image (116) of the line rendered in the first region comprise the color of the line and the width of the line.

9. A method for rendering an image on a display screen (108) of an electronic device (110), comprising:
at a first time, rendering an image (116) of a line in a first region on the display screen in response to a first input from a stylus (102) in the first region; and
during a time period following the first time:
detecting a user touch trajectory (202) on the display screen (108);
detecting a region of intersection (206) of the user touch trajectory (202) and the first region; and
if the region of intersection (206) is detected, rendering an image (118) of a smudged line in a second region, the second region dependent upon the user touch trajectory (202) and contiguous the region of intersection (206).

10. The method of claim 9, where a color of the image (118) of a smudged line is selected dependent upon the color of the image of the line (116) in the region of intersection (206).

11. The method of claim 9, further comprising:
during the time period following the first time, rendering an image of a line in a second region on the display screen (108) in response to a second input from the stylus (102).

12. A method for rendering an image on a display screen of an electronic device, comprising:
detecting a user touch position (112) on the display screen at a first time;
updating a user touch trajectory (202) dependent upon the user touch position (112) at the first time; and
if the user touch trajectory (202) intersects in an intersection region (206) with a line rendered on the display screen within a set time period before the first time, rendering an image (118) of a smudged line in a region of the display screen (108) dependent upon the user touch trajectory (202) and contiguous the intersection region (206).

13. The method of claim 12, further comprising:
selecting on or more properties of image (118) of the smudged line dependent upon one or more properties of the image (116) of the line in the intersection region (206).

14. The method of claim 12, further comprising:
selecting the set time dependent upon one or more properties of an electronic drawing tool utilized to draw the line (116) rendered on the display screen (108).

15. The method of claim 12, further comprising:
storing time and position information of a line rendered (116) on the display screen (108) in a database; and
searching the database dependent upon the user touch trajectory (202) to determine if the user touch trajectory intersects in an intersection region (206) with the line (116) rendered on the display screen (108) within a set time period before the first time.
